# EUROPÄISCHE PATENTSCHRIFT

(11) **EP 3 353 022 B1**
(45) Veröffentlichungstag und Bekanntmachung des Hinweises auf die Patenterteilung: **10.11.2021**
(21) Anmeldenummer: 16770257.0
(22) Anmeldetag: 20.09.2016
(51) Int. Cl.: B60T 8/17, B60T 13/66, B60T 8/32, B60T 17/22

(54) **VALIDIERUNGS- UND ZERTIFIZIERUNGSVERFAHREN FÜR EIN SCHIENENFAHRZEUG**
METHOD FOR VALIDATION AND CERTIFICATION OF A RAIL VEHICLE
PROCEDE DE VALIDATION ET DE CERTIFICATION DE VEHICULE FERROVIAIRE

(30) Priorität: 25.09.2015 DE 102015116208
(43) Veröffentlichungstag der Anmeldung: 01.08.2018
(73) Patentinhaber: KNORR-BREMSE Systeme für Schienenfahrzeuge GmbH, 80809 München (DE)
(72) Erfinder: AURICH, Stefan, 86316 Friedberg (DE); GRUNWALD, Torsten, 82418 Seehausen am Staffelsee (DE); ZIMMERMANN, Christof, 82152 Planegg (DE)
(86) Internationale Anmeldenummer: PCT/EP2016/072316
(87) Internationale Veröffentlichungsnummer: WO 2017/050770

(56) Entgegenhaltungen:
- DE-A1-102007 006 725
- DE-A1-102008 032 710
- US-A1- 2009 255 329

## Beschreibung

Die vorliegende Erfindung betrifft ein Validierungs- und Zertifizierungsverfahren für ein Schienenfahrzeug.

Fahrzeuge, wie Schienenfahrzeuge, unterliegen bei gesteuerten Bremssystemen dem Einfluss von Toleranzen und belastungsabhängigen Schwankungen von Kenngrößen.

Insbesondere der dynamische Belagreibwert ist vom Lastzustand, der Eingangstemperatur und sonstigen energetischen Einflüssen abhängig. In der Regel müssen hierzu mehrfach Bremsversuche mit dem Fahrzeug auf einer geeigneten und abgesperrten Versuchsstrecke durchgeführt werden, bis iterativ der richtige Parametersatz sowie der richtige Einstellpunkt der mechanischen Bremse gefunden ist.

Moderne Fahrzeuge haben hier einen wesentlichen Anteil der Funktionen in der elektronischen Steuerung. Im Rahmen der iterativen Bestimmung der Einstellung und des Parametersatzes sind hier erhebliche Anstrengungen und großer Aufwand notwendig, um jeweils die Änderungen für einen neuen Iterationsschritt vor Aufnahme der Versuche zu verifizieren, zu validieren und ggf. (je nach Zuständigkeit der Aufsichtsbehörde und ihre Anforderungen) zu zertifizieren. Daraus ergibt sich immer mehr das Problem der Unklarheit bezüglich Kosten und Zeitpunkt.

Aus der US 2009255329 A1 ist System zum Bestimmen der Bremsbackenwirkung einer Bremsanordnung eines Schienenfahrzeugs während des Zugbetriebs bekannt, wobei die Bremsanordnung mindestens einen Bremsbackenmechanismus umfasst, der so konfiguriert ist, um mindestens ein Rad des Schienenfahrzeugs direkt oder indirekt zu kontaktieren und die Drehung des mindestens einen Rades zu verzögern.

Ferner zeigt die DE 102008032710 A1 eine Bremseinrichtung zur Steuerung der Druckbeaufschlagung eines Bremszylinders bei einem pneumatischen Bremssystem, mit einer in einem Ventilgehäuse untergebrachten pneumatischen Vorsteuereinheit für die Betätigung eines Relaisventils zur Aussteuerung des Bremsdrucks, wobei ein dazwischen angeordneter Betätigungskraft übertragender Waagebalken mit Mitteln zur Verschiebung eines Widerlagers in Abhängigkeit vom Lastzustand des Fahrzeuges zusammenwirkt, die bei einer Bremsung - insbesondere Notbremsung - aus hoher Geschwindigkeit das Widerlager kontinuierlich nach Maßgabe einer die maximal zulässige Adhäsion ausnutzenden Bremsdruck-Geschwindigkeit-Kennlinie verschieben.

Weiter ist aus der DE102007006725 A1 eine Bremseinrichtung zum Abbremsen eines Fahrzeuges bekannt, das eine drehfest mit einer Radachse des Fahrzeugs verbundene Bremsfläche aufweist, mit einem an die Bremsfläche mit einer Bremskraft anpressbaren Bremsbelag und einem mit einer Regelungseinheit gekoppelten Stellglied zum Erzeugen der Bremskraft, wobei die Regelungseinheit mit einem Geschwindigkeitssensor zum Erfassen einer Geschwindigkeit des Fahrzeugs verknüpft und zum Einstellen der Bremskraft in Abhängigkeit der Geschwindigkeit eingerichtet ist.

Aus der DE 10 2010 049 303 A1 ist ein Verfahren zur Steuerung einer gleitschutzgeregelten Reibungsbremsanlage eines Schienenfahrzeugs bekannt. Dabei wird eine bremsschlupfende Achse eines Schienenfahrzeugs identifiziert, wenn bei einer Bremsung ein vorgegebenes Maß überschreitender Bremsschlupf auftritt und deshalb die Gleitschutzregelung aktiviert werden muss und es wird mittels eines Steuergeräts berechnet, welche Bremsarbeit verloren wurde durch die bremsschlupfende Achse, um die verlorene Bremsarbeit durch Erhöhung des Bremsdruckes zumindest teilweise zu kompensieren.

Aus der DE 10 2010 053 683 A1 ist ein Verfahren zur Steuerung einer gleitschutzgeregelten Reibungsbremsanlage eines Schienenfahrzeugs bekannt, bei dem die Reibungsbremskräfte an einer bremsschlupfenden Achse angepasst werden, und zwar derart, dass durch wenigstens teilweise Kompensation der aufgrund des unzulässigen Bremsschlupfs an der wenigstens einen Achse verlorenen Reibungsbremskraft durch diese Einpassung eine Abweichung der Ist-Verzögerung des Schienenfahrzeugs oder des Schienenfahrzeugzuges von einer durch die Notbremsanforderung vorgegebenen Sollbremsverzögerung innerhalb eines tolerierbaren Bereichs gehalten werden kann.

Ferner ist aus der DE 10 2009 042 965 A1 ein Bremssystem mit intelligentem Aktuator zum Abbremsen eines schienengeführten Fahrzeugs bekannt. Dabei weist das Bremssystem einen Steuerungsanschluss auf, der zum Empfang der Steuersignale über eine Datenleitung mit der Bremssteuerung verbunden ist, wobei der Steuerungsanschluss mit einer Logikeinheit des Aktuators verbunden ist, die zum Einstellen der Bremskraft in Abhängigkeit der Steuersignale eingerichtet ist.

Ferner ist aus der DE 10 2012 219 984 A1 ein Bremsaktor für ein Bremssystem eines Fahrzeugs bekannt, insbesondere eines Schienenfahrzeugs. Dabei ist zur Verbesserung der Regelbarkeit eines Bremsaktors eine Sollwertregelungseinrichtung ausgebildet, die bei vorbestimmten Betriebsbedingungen des Fahrzeugs zur Regelung der Anpressgröße den Ausgangssollwert für die Bremseinlage so einstellt, dass der erfasste Istwert der Anpressgröße einem Sollwert der Anpressgröße entspricht. Eine derartige Vorgehensweise ist jedoch mit einer aufwendigen Regelung verbunden, die die Komplexität und damit auch die Kosten des Systems erhöht.

Wünschenswert wäre es, insbesondere ein einfach, aber zuverlässig aufgebautes Bremssteuerungssystem und ein entsprechendes Verfahren hierzu zu schaffen.

Es ist die Aufgabe der vorliegenden Erfindung, ein Validierungs- und Zertifizierungsverfahren für ein Schienenfahrzeug in vorteilhafter Weise weiterzubilden, insbesondere dahingehend, dass eine Validierung und Zertifizierung eines Schienenfahrzeugs vereinfacht werden kann, eine bessere Planbarkeit des Validierungs- und Zertifizierungsprozesses ermöglicht wird und hierdurch auch Kosten und Zeit eingespart werden können.

Diese Aufgabe wird erfindungsgemäß gelöst durch den Gegenstand des Anspruchs 1.

Die Erfindung basiert auf dem Grundgedanken, dass eine effiziente Lösung für die Problemstellung der Findung eines Parametersatzes bereitgestellt wird. Im Schienenfahrzeug wird ein System installiert, bestehend aus mindestens einem Sensor zur Erfassung von Beschleunigung, Bremsweg und/oder Geschwindigkeit, welches bei den Bremsversuchspfaden die Parameter der Bremssteuerung so einstellt, dass das Verhalten des Bremssystems den Anforderungen entspricht. Die in diesem Schritt aufgezeichneten Steuerungsgrößen, d.h. Größen, die seitens des Bremssteuerungssystem gesteuert werden können, zur Einhaltung der Leistungsgrößen, d.h. Größen, die sich auf der Grundlage des Betriebszustandes des Schienenfahrzeugs ergeben und durch das Bremssteuerungssystem nur indirekt beeinflusst werden können, werden abgespeichert und als Kennlinie in der Brems- und/oder Fahrzeugsteuerung hinterlegt.

Nach Abschluss der Inbetriebsetzung steht somit mindestens eine Kennlinie zur Verfügung, die durch die Bremssteuerung als Basis für die Ansteuerung der Bremskraft ausgewertet und für die Steuerung des Bremssystems verwendet wird.

Die iterative Ermittlung des bestgeeigneten Parametersatzes zur Einhaltung der normativen Anforderungen kann auf diesem Weg also entfallen. Im Regelfall muss nur noch die behördliche Abnahmefahrt zum offiziellen Nachweis der Einhaltung der normativen Anforderungen durchgeführt werden.

Die Kennlinien können sowohl als Algorithmus in der Applikationssoftware (in der Regel der Betriebsbremse) als auch als feste Kennlinie in einer speicherprogrammierbaren Steuerung für den Einsatz einer sicheren Not- oder Schnellbremse verwendet werden.

Der Begriff Referenzbremsfahrt kann einen statischen und/oder dynamischen Betrieb eines Bremssystems, eine Testfahrt oder auch mehrere Testfahrten umfassen.

Der Begriff Steuerungsgröße und auch der Begriff Leistungsgröße ist weiter insbesondere dahingehend zu verstehen, dass diese eine relevante Größe, die z.B. das Bremssystem bzw. Teile des Bremssystems oder das Verhalten Bremssystems beschreibt bzw. charakteristisch für dieses ist, beschreibt oder kennzeichnet.

Das Schienenfahrzeug kann ein Triebwagen oder ein Zug mit Triebköpfen und Zugwagen, ein Verbund mit wenigstens einer Lokomotive und einem oder mehreren Wagen, ein Hochgeschwindigkeitszug oder dergleichen sein.

Des Weiteren kann vorgesehen sein, dass die wenigstens eine Steuerungsgröße Kraft und/oder Druck und/oder Strom und/oder Zeit beschreibt.

Bei der Kraft kann es sich um die Bremskraft handeln, die durch das Bremssystem bereit gestellt werden soll.

Bei dem Druck kann es sich um den Druck handeln, der bei den pneumatischen und/oder hydraulischen Komponenten des Bremssystems anliegt.

Der Strom kann beispielsweise der im Bremssystem zur Ansteuerung anliegende Strom sein.

Die Zeit kann die Zeit sein, die das Bremssystem betätigt wird, um die gewünschte Bremswirkung zu erzielen.

Des Weiteren kann vorgesehen sein, dass die wenigstens eine Leistungsgröße Bremsweg und/oder Verzögerung und/oder Beschleunigung und/oder Kraftsschluss Rad/Schiene und/oder Reaktionszeit beschreibt. Diese Leistungsgrößen sind jede für sich genommen charakteristisch für das Leistungsvermögen und den Betriebszustand des Bremssystems und daher jeweils für sich genommen gut geeignet, als Größe in die Kennlinie einzugehen.

Des Weiteren ist denkbar, dass mehrere Kennlinien vorgesehen sind, die ein mehrdimensionales Kennlinienfeld ergeben. Dadurch wird es möglich, mehrdimensionale Zusammenhänge zu beschreiben. Eine genauere Beschreibung des Bremssystems wird somit möglich. Dies resultiert auch in einer verbesserten Genauigkeit der Steuerung des Bremssystems.

Des Weiteren wird hier ein nicht beanspruchtes Bremssteuerungssystem für ein Schienenfahrzeug mit einem Bremssystem offenbart, wobei das Bremssystem zumindest anteilig eine Reibungsbremse aufweist, mit wenigstens einer Steuereinheit, wobei die Steuereinheit wenigstens eine Dateneingangsschnittstelle und wenigstens eine Datenausgangsschnittstelle sowie wenigstens einen Steuerdatensatzspeicher aufweist, und mit wenigstens einem Sensor, wobei zumindest teilweise mittels des Sensors Steuerungsgrößen und/oder Leistungsgrößen ermittelbar sind, wobei das Bremssteuerungssystem weiter wenigstens eine Recheneinheit aufweist, wobei mittels der Recheneinheit mittels wenigstens einer virtuellen und/oder wenigstens einer realen Referenzbremsfahrt des Schienenfahrzeuges wenigstens eine Kennlinie ermittelbar ist, die wenigstens eine Steuerungsgröße zur Einhaltung wenigstens einer Leistungsgröße zueinander in Bezug setzt, wobei mittels der Steuereinheit über die Dateneingangsschnittstelle die Kennlinie in den Steuerdatensatzspeicher einspeicherbar ist und wobei mittels der Kennlinie durch die Steuereinheit das Bremssystem über die Datenausgangsschnittstelle derart ansteuerbar ist, dass die die Kennlinie als Grundlage für die Ansteuerung des Bremssystems des Schienenfahrzeugs dient.

Sämtliche vorstehend im Zusammenhang mit dem Verfahren zum Betrieb eines Bremssteuerungssystem für ein Schienenfahrzeug mit einem Bremssystem beschriebenen strukturellen und funktionalen Merkmale und Vorteile sind ebenfalls im Zusammenhang mit dem Bremssteuerungssystem realisierbar und können einzeln und/oder Kombination verwirklicht sein.

Ferner kann vorgesehen sein, dass die wenigstens eine Steuerungsgröße Kraft und/oder Druck und/oder Strom und/oder Zeit beschreibt.

Es ist möglich, dass die wenigstens eine Leistungsgröße Bremsweg und/oder Verzögerung und/oder Beschleunigung und/oder Kraftsschluss Rad/Schiene und/oder Reaktionszeit beschreibt.

Außerdem ist denkbar, dass mehrere Kennlinien vorgesehen sind, die ein mehrdimensionales Kennlinienfeld ergeben.

Denkbar ist, dass Kennlinien sowohl als Algorithmus in der Applikationssoftware (in der Regel der Software der Betriebsbremse) als auch als feste Kennlinie in einer speicherprogrammierbaren Steuerung für den Einsatz einer sicheren Not- oder Schnellbremse verwendet werden können.

Darüber hinaus wird hier ein nicht beanspruchtes Bremssystem offenbart, wobei das Bremssystem zumindest anteilig eine Reibungsbremse aufweist, mit wenigstens einem Bremssteuerungssystem.

Weitere Einzelheiten und Vorteile der Erfindung sollen nun anhand eines in den Zeichnungen dargestellten Ausführungsbeispiels näher erläutert werden.

Die einzige Figur zeigt dabei eine schematische Darstellung eines Ausführungsbeispiels des erfindungsgemäßen Bremssteuerungssystems in einem erfindungsgemäßen Bremssystem eines erfindungsgemäßen Schienenfahrzeugs, mit dem das erfindungsgemäße Verfahren durchführbar ist.

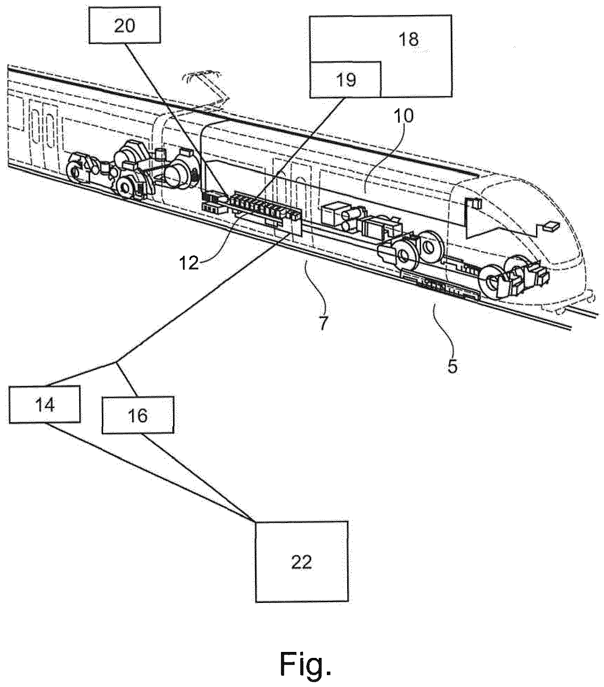

Fig. 1 zeigt eine schematische Darstellung eines erfindungsgemäßen Schienenfahrzeugs 5 mit einem Bremssystem 7.

Weiter ist schematisch ein Ausführungsbeispiel des erfindungsgemäßen Bremssteuerungssystems 10 für ein erfindungsgemäßes Bremssystem 7 gezeigt, mit dem das erfindungsgemäße Verfahren durchführbar ist.

Das Bremssystem 7 ist im hier beschriebenen Ausführungsbeispiel eine pneumatische Bremsanlage des Schienenfahrzeugs 5 und weist anteilig eine Reibungsbremse auf.

Das Bremssteuerungssystem 10 weist eine Steuereinheit 12 auf, wobei die Steuereinheit 12 wenigstens eine Dateneingangsschnittstelle 14 und wenigstens eine Datenausgangsschnittstelle 16 sowie wenigstens Steuerdatensatzspeicher 18 für Steuerdatensätze aufweist. In dem Steuerdatensatzspeicher 18 wird bzw. werden die Kennlinie 19 bzw. die Kennlinien 19 eingespeichert.

Ferner sind Sensoren 20 zur Erfassung von Steuerungsgrößen und Leistungsgrößen des Bremssystems 10 z.B. in einem Referenzbetrieb vorgesehen.

Die Sensoren 20 sind geeignete Sensoren, um Betriebsparameter wie
- Reibwerte wie z.B. Bremsbelag/Bremsscheibe, Rad/Schiene
- Fahrzeuggewicht
- Bremskraft
- Höchstgeschwindigkeit
- Bremskraftverteilung
zu erfassen.

Weiter ist eine Recheneinheit 22 vorgesehen, die im gezeigten Ausführungsbeispiel Bestandteil des Bremssteuerungssystem 10 ist.

Die Funktion des Bremssteuerungssystems bzw. des Verfahrens ist wie folgt:
Bei dem erfindungsgemäßen Verfahren, das mittels des Bremssteuerungssystems 10 für ein Schienenfahrzeug 5 mit einem Bremssystem 7 durchgeführt wird, wird zunächst mittels wenigstens einer virtuellen und wenigstens einer realen Referenzbremsfahrt des Schienenfahrzeugs 5 wenigstens eine Kennlinie ermittelt, die wenigstens eine Steuerungsgröße zur Einhaltung wenigstens einer Leistungsgröße zueinander in Bezug setzt.

Die Steuerungsgrößen beschreiben insbesondere Kraft, Druck, Strom und Zeit.

Die Leistungsgrößen beschreiben insbesondere Bremsweg, Verzögerung, Beschleunigung, Kraftsschluss Rad/Schiene und Reaktionszeit.

Im Rahmen der Referenzbremsfahrt des Schienenfahrzeugs 5 werden (auch) Parameter wie beispielsweise
- Bremsweg
- Luftverbrauch
- Ansprechverhalten Gleitschutz
- Ansprechzeit Bremse
- Befüllzeiten
ermittelt.

Weitere Parameter bzw. Leistungsgrößen können in die Erstellung der Kennlinie(n) eingehen. Zu diesen technischen Parameter gehören, jedoch nicht ausschließlich:
- Reibwerte wie z.B. Bremsbelag/Bremsscheibe, Rad/Schiene
- Fahrzeuggewicht
- Bremskraft
- Höchstgeschwindigkeit
- Bremskraftverteilung
- Ansprechverhalten auf Komponentenbasis
- Steuergerätalgorithmen

Optional können weitere Parameter ermittelt werden. Zu diesen gehören beispielsweise, aber nicht ausschließlich:
- Behältergrößen
- Rohrleitungsdurchmesser
- Rohrleitungslängen
- Druckabfall in Leitungen, Reibungsverluste

Der Begriff Referenzbremsfahrt kann dabei auch Abschnitte aufweisen, in denen ein normaler Fahrbetrieb stattfindet oder Hochgeschwindigkeitsfahrten oder Langsamfahrten oder Situationen wie eine Notbremsung und eine Bahnhofseinfahrt simuliert werden.

Die mittels der Recheneinheit 22 errechnete Kennlinie 19 wird im Bremssteuerungssystem 10 hinterlegt. Hierzu wird diese über die Dateneingangsschnittstelle 14 in die Steuerdatensatzspeicher 18 eingespeichert.

Die Kennlinie 19 dient als Grundlage für die Ansteuerung des Bremssystems 7 des Schienenfahrzeugs.

Es können grundsätzlich auch mehrere Kennlinien vorgesehen sind, die ein mehrdimensionales Kennlinienfeld ergeben.

Die Kennlinien 19 können sowohl als Algorithmus in der Applikationssoftware (in der Regel der Betriebsbremse) als auch als feste Kennlinie 19 in einer speicherprogrammierbaren Steuerung für den Einsatz einer sicheren Not- oder Schnellbremse verwendet werden.

Durch die kennlinienbasierte Steuerung des Bremssystems 7 mittels des Bremssteuerungssystems 10 wird es möglich, zumindest jedem relevantem Betriebszustand des Schienenfahrzeugs 5 die jeweiligen Steuerungsgrößen zu hinterlegen, die für die gewünschten Leistungsgrößen notwendig sind.

Dadurch wird eine einfache und zuverlässige Steuerung des Bremssystems 7 des Schienenfahrzeugs 5 ermöglicht.

### BEZUGSZEICHENLISTE

- 5: Schienenfahrzeug
- 7: Bremssystem
- 10: Bremssteuerungssystem
- 12: Steuereinheit
- 14: Dateneingangsschnittstelle
- 16: Datenausgangsschnittstelle
- 18: Steuerdatensatzspeicher
- 19: Kennlinie
- 20: Sensor
- 22: Recheneinheit

## Patentansprüche

1. Validierungs- und Zertifizierungsverfahren für ein Schienenfahrzeug (5) mit einem Bremssystem (7) und einem Bremssteuerungssystem (10) für das Bremssystem (7), wobei das Bremssystem (7) zumindest anteilig eine Reibungsbremse aufweist, mit wenigstens den folgenden Schritten:
- Es wird mittels einer realen und wenigstens einer virtuellen Referenzbremsfahrt des Schienenfahrzeuges (5) wenigstens eine Kennlinie ermittelt, die wenigstens eine Steuerungsgröße zur Einhaltung wenigstens einer Leistungsgröße zueinander in Bezug setzt;
- die Kennlinie wird im Bremssteuerungssystem (10) hinterlegt; und
- die Kennlinie dient als Grundlage für die Ansteuerung des Bremssystems (7) des Schienenfahrzeugs.

2. Verfahren nach Anspruch 1,
**dadurch gekennzeichnet, dass**
die wenigstens eine Steuerungsgröße Kraft und/oder Druck und/oder Strom und/oder Zeit beschreibt.

3. Verfahren nach Anspruch 1 oder Anspruch 2,
**dadurch gekennzeichnet, dass**
die wenigstens eine Leistungsgröße Bremsweg und/oder Verzögerung und/oder Beschleunigung und/oder Kraftsschluss Rad/Schiene und/oder Reaktionszeit beschreibt.

4. Verfahren nach einem der vorhergehenden Ansprüche,
**dadurch gekennzeichnet, dass**
mehrere Kennlinien vorgesehen sind, die ein mehrdimensionales Kennlinienfeld ergeben.

## Claims

1. Validation and certification method for a rail vehicle (5) having a brake system (7) and a brake control system (10) for the brake system (7), wherein the brake system (7) comprises at least as a component a friction brake, said method having at least the following steps:
- At least one characteristic correlating at least one control variable for maintaining at least one performance variable is determined by means of at least one virtual and/or at least one real reference braking journey of the rail vehicle (5);
- The characteristic is stored in the brake control system (10); and
- The characteristic is used as a basis for actuating the brake system (7) of the rail vehicle.

2. Method according to claim 1,
**characterised in that**
the at least one control variable describes force and/or pressure and/or current and/or time.

3. Method according to claim 1,
**characterised in that**
the at least one performance variable describes braking distance and/or deceleration and/or acceleration and/or traction wheel to rail and/or reaction time.

4. Method according to any of the preceding claims,
**characterised in that**
multiple characteristics are provided that provide a multidimensional characteristic map.

## Revendications

1. Procédé de validation et de certification d'un véhicule (5) ferroviaire comprenant un système (7) de frein et un système (10) de commande de frein du système (7) de frein, dans lequel le système (7) de frein a au moins en proportion un frein de friction, ayant au moins les stades suivants :
- on détermine au moyen d'une course de frein de référence réelle et d'au moins une course de frein de référence virtuelle du véhicule (5) ferroviaire au moins une courbe caractéristique, qui met en relation entre elles au moins une grandeur de commande pour le maintien d'au moins une grandeur de puissance ;
- on met la courbe caractéristique en mémoire dans le système (10) de commande de frein ; et
- la courbe caractéristique sert de base pour la commande du système (7) de frein du véhicule ferroviaire.

2. Procédé suivant la revendication 1,
**caractérisé en ce que**
la au moins une grandeur de commande décrit une force et/ou une pression et/ou un courant et/ou un temps.

3. Procédé suivant la revendication 1 ou la revendication 2,
**caractérisé en ce que**
la au moins une grandeur de puissance décrit une course de frein et/ou une décélération et/ou une accélération et/ou une adhérence roue/rail et/ou un temps de réaction.

4. Procédé suivant l'une des revendications précédentes,
**caractérisé en ce que**
il est prévu plusieurs courbes caractéristiques qui donnent un champ de courbes caractéristiques à plusieurs dimensions.
